# EUROPÄISCHE PATENTSCHRIFT

(11) **EP 2 291 852 B1**
(45) Veröffentlichungstag und Bekanntmachung des Hinweises auf die Patenterteilung: **09.08.2017**
(21) Anmeldenummer: 09768902.0
(22) Anmeldetag: 05.06.2009
(51) Int. Cl.: H01F 7/16, F16K 31/06

(54) **BETÄTIGUNGSVORRICHTUNG**
ACTUATING DEVICE
DISPOSITIF D'ACTIONNEMENT

(30) Priorität: 26.06.2008 DE 102008030454
(43) Veröffentlichungstag der Anmeldung: 09.03.2011
(73) Patentinhaber: Hydac Electronic GmbH, 66128 Saarbrücken (DE)
(72) Erfinder: BILL, Martin, 66625 Nohfelden (DE); LAUER, Florian, 66571 Eppelborn (DE)
(74) Vertreter: Bartels, Martin Erich Arthur
(86) Internationale Anmeldenummer: PCT/EP2009/004038
(87) Internationale Veröffentlichungsnummer: WO 2009/156053

(56) Entgegenhaltungen:
- DE-A1-102004 028 871
- US-A1- 2003 136 931

## Beschreibung

Die Erfindung betrifft eine Betätigungsvorrichtung, insbesondere zum Betätigen von außenseitig anschließbaren Ventilen gemäß der Merkmalsausgestaltung des Oberbegriffs des Patentanspruches 1.

Dahingehende Betätigungsvorrichtungen, die man in der Fachsprache auch als "Betätigungs- oder Schaltmagnete" bezeichnet, sind beispielhaft in der DE 101 04 998 A1 beschrieben und auf dem Markt in einer Vielzahl von Ausführungsformen frei erhältlich. Das Betätigungsteil des Betätigungsmagneten ist im wesentlichen aus einem rohrförmigen Bolzen gebildet, der bei elektrischer Erregung der Spulenwicklung über einen an die Steckerplatte eines Anschlußsteckers anschließbaren Gerätesteckers eine vorgebbare Wegstrecke zurücklegt und hierbei einen Schalt- oder Betätigungsvorgang auslöst, beispielsweise bei einem von außen angeschlossenen Ventil zum Absperren und Führen von Fluidströmen. Entfällt die Bestromung, ist der Schaltmagnet also stromlos, wird regelmäßig über eine Rückstellfeder, die in der Betätigungsvorrichtung selbst und/oder am zu betätigenden Ventil angeordnet ist, für einen erneuten Betätigungsvorgang beim Bestromen der Spule der Magnetanker rückgestellt.

Durch die DE 10 2004 028 871 A1, die den Oberbegriff des Anspruchs 1 offenbart, ist eine gattungsgemäße Betätigungsvorrichtung bekannt, bei der die Außenumfangsgestalt des Betätigungsteils zur Innenumfangsgestalt eines Führungskanals im Polkern derart gewählt ist, dass mindestens eine fluidführende Verbindung von außen zum Ankerraum hergestellt ist, um die für einen ordnungsgemäßen Betrieb notwendige fluid- und/oder druckführende Verbindung vom Ventilinneren zum Inneren der Betätigungsvorrichtung in Form des Ankerraumes über den Führungskanal sicher zu stellen, der ohnehin vorhanden ist, um das Betätigungsteil im Polkern verfahrbar zu lagern. Da der genannte Führungskanal Teil von standardisierbaren Polkernen ist, ist dergestalt eine Grundvoraussetzung erfüllt für einen modularen Aufbau der bekannten Betätigungsvorrichtungslösung.

Die Querschnittsfläche des Führungskanals ist von bogenförmigen und/oder geradlinig verlaufenden Wandsegmenten begrenzt, wobei die Querschnittsfläche des stangenartigen Betätigungsteils hiervon abweichend unter Bildung der jeweiligen fluidführenden Verbindung von geradlinigen und/oder bogenförmigen weiteren Wandsegmenten begrenzt ist, und wobei zumindest teilweise die weiteren Wandsegmente an den Wandsegmenten des Führungskanals beim Bewegen des Betätigungsteils geführt sind. Demgemäß ist bei der bekannten Lösung eine Vielzahl an Möglichkeiten eröffnet durch entsprechende Gestaltung der jeweiligen Wandsegmente von Betätigungsteil und Führungskanal die jeweilige fluidführende Verbindung zu realisieren, wobei dennoch eine Führung des Betätigungsteils längs den Wandsegmenten des Führungskanals im Polkern gewährleistet ist. Im einfachsten Fall ist die Querschnittsfläche des Führungskanals kreisrund gewählt und auf seinen Querschnitt bezogen ist das Betätigungsteil ein stangenförmiger Mehrkant. Aufgrund der freibleibenden Querschnittsfläche verbleiben entsprechend groß dimensionierte fluidführende Verbindungen zwischen Ventilinnerem und Ankerraum und Strömungsverluste durch turbulente Strömung sind aufgrund der geradlinig verlaufenden Fluidverbindungen dergestalt vermieden. Trotz dieser Vorteile ist die bekannte Lösung, was die Führung des Betätigungsteils innerhalb des Polkerns anbelangt, relativ aufwendig und mithin teuer in der Realisierung. Auch wird das stangenartige Betätigungsteil vom Polkern in seinem hinteren, dem Ankerraum zugewandten Bereich geführt, so dass es im vorderen freien Abschnittsbereich zu Hemmungen im Betrieb kommen kann, wozu auch die Mehrkantgestaltung des Betätigungsteils mit beiträgt.

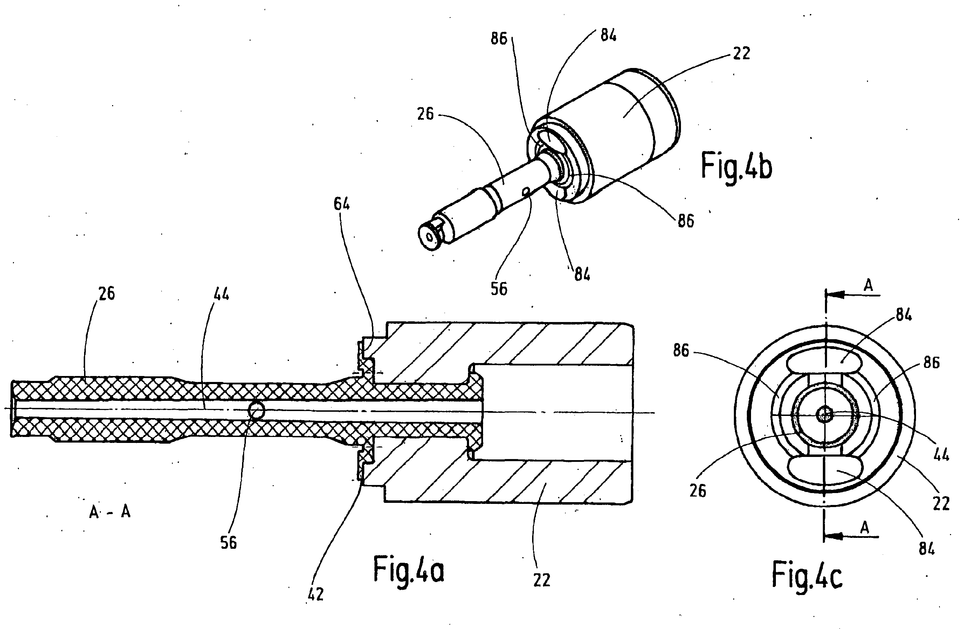

Durch US 2003/136931 A1 ist eine Betätigungsvorrichtung vergleichbarer Bauart bekannt, bei der gemäß einer Ausgestaltung nach der Fig.4 ein Betätigungsteil innerhalb eines Polkerns eines Magnetsystems entlang eines Ringkörpers geführt ist, der das Innere des Polkerns und ein an diesen Polkern angeschlossenes Polrohr gegenüber der Umgebung abdichtet. Des Weiteren ist das Betätigungsteil mittels eines Magnetankers des Magnetsystems verfahrbar innerhalb des Vorrichtungsgehäuses geführt, wobei die Ansteuerung des Magnetankers, der in einem zugeordneten Ankerraum verfahrbar angeordnet ist, über einen bestrombaren Spulenkörper mit Spulenwicklung erfolgt.

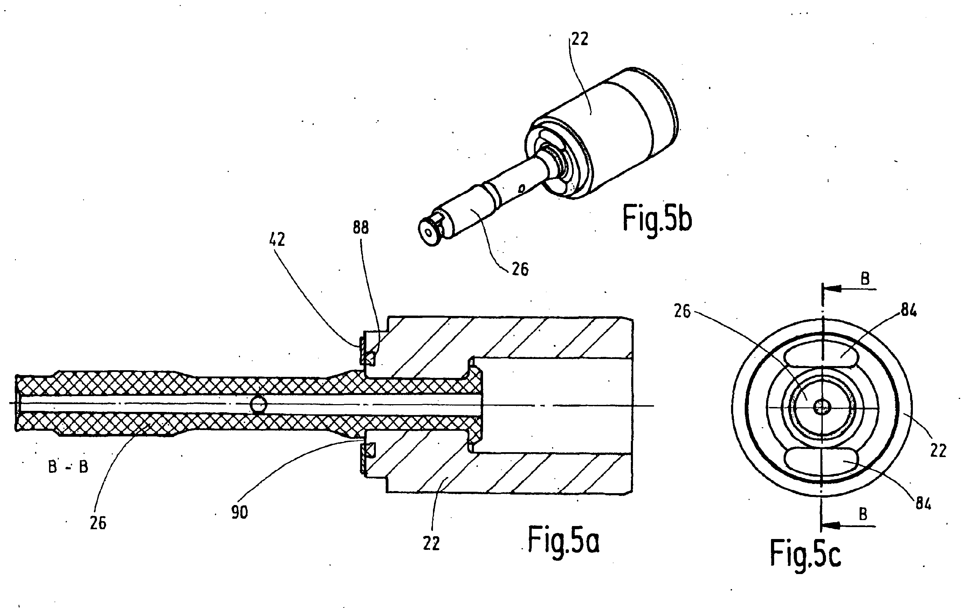

Bei einer weiteren Ausführungsform gemäß den Fig.5 bis 9 ist bei der bekannten Lösung das stangenartige Betätigungsteil endseitig zwischen zwei Ringkörpern gleitend geführt, die zumindest teilweise auf ihrer dem Betätigungsteil jeweils zugewandten Innenseite eine umlaufende Ringnut aufweisen, in die jeweils ein elastomeres Dichtteil in der Art eines O-Ringes eingesetzt ist, wobei die Ringnut in axialer Richtung eine größere Erstreckung aufweist als die vorgesehene Breite des O-Dichtringes. Dadurch, dass bei der bekannten Lösung das ringförmige Dichtteil in einer Ringnut des jeweiligen Ringkörpers aufgenommen ist, ist die Länge der Gleitanlage des stangenartigen Betätigungsteils an der zugewandten Innenwandung des eigentlichen Ringkörpers verkürzt, so dass eine sichere und funktionsgerechte Führung des Betätigungsteils trotz der beiden endseitig vorhandenen Ringkörper insoweit beeinträchtigt ist. Da letztendlich der jeweils in die Ringnut eingesetzte Dichtring mit seiner dem Betätigungsteil zugewandten Innenseite dem Grund nach Bestandteil der Gleitanlage ist, kommt es zu abrasiven Vorgängen am elastomeren Dichtmaterial des jeweiligen Dichtringes; auch wenn dieser aufgrund der längeren Axialerstreckung innerhalb der Ringnut mit Betätigung des Betätigungsteils je nach dessen Verfahrrichtung eine vorgebbare Ausgleichsverfahrstrecke zurücklegen kann, was wiederum die funktionssichere Führung des Betätigungsteils im Polkern beeinträchtigt und darüber hinaus die Dichtheit der Abdichtung beeinträchtigt.

Ausgehend von diesem Stand der Technik liegt der Erfindung die Aufgabe zugrunde, die bekannte Lösung unter Beibehalten ihrer Vorteile dahingehend weiter zu verbessern, dass diese mit geringen Herstellkosten eine sichere und funktionsgerechte Führung des Betätigungsteils im Polkern erlaubt. Eine dahingehende Aufgabe löst eine Betätigungsvorrichtung mit den Merkmalen des Patentanspruches 1 in seiner Gesamtheit.

Dadurch, dass bei einer gattungsgemäßen Betätigungsvorrichtung gemäß dem kennzeichnenden Teil des Patentanspruches 1 das Betätigungsteil innerhalb des Polkerns entlang eines Ringkörpers geführt ist, der das Innere von Polkern und an diesem angeschlossenen Polrohr gegenüber der Umgebung abdichtet und dass in jeder Verfahrstellung des Betätigungsteils ein an seinem Außenumfang in einer Ringnut angebrachtes Dichtteil in dichtender Anlage mit dem Innenumfang des Ringkörpers ist, ist zum einen eine sichere Umfassungsführung für eine zuordenbare Umfangsführungsfläche des Betätigungsteils erreicht bei gleichzeitiger Abdichtung im heiklen Bereich der Führung. Aufgrund der hülsenartigen Anordnung des Ringkörpers, der auf seiner Innenumfangsseite vorzugsweise zumindest teilweise mit einer Art Gleitschicht versehen ist oder diese selbst ausbildet, ist das bevorzugt in der Art eines Elastomer-Dichtringes ausgebildete Dichtteil, aufgenommen in der Ringnut des Betätigungsteils, von abrasiven Verschleißvorgängen verschont, so dass ein lang andauernder dichtender Betrieb der Betätigungsvorrichtung in diesem Bereich verwirklicht ist.

Sofern zur Medienführung und/oder zum Erhalt einer Druckausgleichsfunktion zwischen Betätigungsvorrichtung und Ventil Medienströme, wie Pneumatikanteile eines Pneumatikventils, ins Innere der Betätigungsvorrichtung zu führen sind, kann das Betätigungsteil bevorzugt über einen Mittenkanal verfügen, der an dem dichtenden Ringkörper vorbeigeführt dessen Dicht- und Gleitfunktion nicht beeinträchtigt.

Bei einer bevorzugten Ausführungsform der erfindungsgemäßen Betätigungsvorrichtung ist vorgesehen, dass der Ringkörper in der Art einer Preßhülse ausgebildet in eine Ausnehmung des Polkerns eingesetzt ist, die mit ihrem einen Ende in die Umgebung mündet. Auf diese Art und Weise ist der Ringführungskörper am freien Endbereich des stangenartigen Betätigungsteils angeordnet und kann im Sinne einer Gleitlagerung das freie Ende stützen, so dass zum einen sichere Betätigungsvorgänge gewährleistet sind und Hemmnisse im Betrieb sind vermieden.
Vorzugsweise ist dabei vorgesehen, dass der Ringkörper, zumindest teilweise, mittels eines Bördelrandes des Polkerns in dessen Ausnehmung gehalten ist. Auf diese Art und Weise läßt sich durch Einstemmen des freien Umfassungsrandes des Polkerns, der das Betätigungsteil insoweit umschließt, eingestemmt oder eingebördelt die Lagefixierung für den Ringkörper herstellen.
Vorzugsweise ist weiter vorgesehen, dass zumindest entlang der möglichen Verfahrstrecke des genannten Dichtteils und zum Inneren von Polkern und Polrohr gewandt der Außenumfang des Betätigungsteils dichtend am zugeordneten Innenumfang des Ringkörpers anliegt. Besonders bevorzugt ist ferner vorgesehen, dass vom Dichtteil in Richtung des freien Endes des Betätigungsteils gesehen der Außendurchmesser des Betätigungsteils gegenüber dem Außendurchmesser des Dichtteils verringert ist, so dass auf der einen Seite des Ringkörpers eine funktionierende Dichtstrecke verwirklicht ist und auf der freigehaltenen, gegenüberliegenden Seite erlaubt der Ringkörper einen insoweit anlagefreien Verfahrbetrieb.

Sofern der Ringkörper vorzugsweise zumindest auf seiner der Begrenzungswand der Ausnehmung zugewandten Seite eine vorzugsweise konische Einführhilfe aufweist, läßt sich der Ringkörper besonders leicht in die Ausnehmung einsetzen. Vorzugsweise ist dabei die Einführhilfe auf beiden Seiten des Ringkörpers vorhanden, so dass beim Einsetzen des Ringkörpers nicht auf die Einbaurichtung geachtet werden braucht. Sofern der Polkern mit seiner freien Stirnseite einen Überstand gegenüber der zur Umgebung weisenden Endseite des Ringkörpers hat, ist dieser vor Fremdeinflüssen insbesondere in Form von Beschädigungen geschützt.

Bei einer bevorzugten Ausführungsform der erfindungsgemäßen Betätigungsvorrichtung verjüngt sich das stangenartige Betätigungsteil ausgehend von seinem dichtenden Anlagebereich mit dem Ringkörper in Richtung des Inneren von Polkern und Polrohr. Aufgrund dieses freigeschnittenen Bereichs, der bevorzugt mit dem Medium befüllt ist, ist eine Mittenjustierung im Übergangsbereich zur Dicht- und Gleitstrecke des Betätigungsteils innerhalb des Ringkörpers erreicht.

Sofern der Ringkörper aus einem gleitfähigen Material, insbesondere aus einem thermoplastischen Kunststoffmaterial besteht, ist er leicht aufbauend und kann über entsprechend gut ausgeprägte Dicht- und Gleiteigenschaften verfügen.

Im folgenden wird die erfindungsgemäße Ausführungsform anhand von Ausführungsbeispielen nach der Zeichnung näher erläutert. Dabei zeigen in prizipieller und nicht maßstäblicher Darstellung die
- Fig. 1: in der Art eines Längsschnittes die Betätigungsvorrichtung als Ganzes, jedoch ohne angeschlossene Ventileinrichtung;
- Fig.2: einen vergrößerten Ausschnitt gemäß Kreisdarstellung D in Fig.1;
- Fig.3: in der Art eines Längsschnittes einen Teil der Herstellform betreffend den Anspritzvorgang eines Betätigungsteils an den Magnetanker der Betätigungsvorrichtung;
- Fig.4a,4b und 4c: im Längsschnitt, in perspektivischer Draufsicht sowie in Vorderansicht eine gegenüber den Fig.1 bis 3 geänderte zweite Ausführungsform einer Anspritzlösung;
- Fig. 5a,5b und 5c: in entsprechender Darstellung zu den Fig.4a, 4b und 4c eine dritte Ausführungsform einer Anspritzlösung;
- Fig.6a,6b,6c: eine zu den Fig.4a, 4b und 4c entsprechende Darstellung einer vierten Ausführungsform der Anspritzlösung;
- Fig.7: einen vergrößerten Ausschnitt gemäß Kreisdarstellung A in Fig.1;
- Fig.8: einen vergrößerten Ausschnitt gemäß Kreisdarstellung B in Fig.1;
- Fg.9: einen vergrößerten Ausschnitt gemäß Kreisdarstellung C in Fig.1;
- Fig.10 und 11: in der Art einer Längsschnittdarstellung die einzelnen Herstellschritte für die Detaillösung gemäß Kreisdarstellung C nach Fig.9.

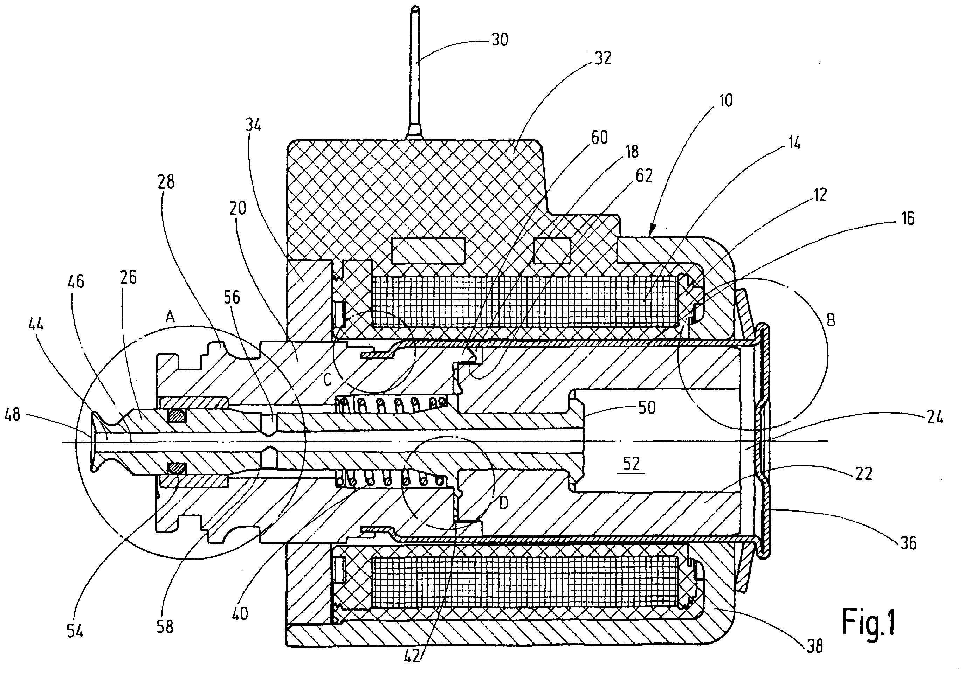

Die in der Fig.1 im Längsschnitt dargestellte Betätigungsvorrichtung, die man in der Fachsprache auch mit "Betätigungs- oder Schaltmagnet" bezeichnet, weist ein als Ganzes mit 10 bezeichnetes Gehäuse auf mit einem darin angeordneten Spulenkörper 12 mit Spulenwicklung 14. Der dahingehende Spulenkörper 12 umfaßt zumindest teilweise ein Polrohr 16, das mittels einer Trennstelle 18 in Form einer freigelassenen Stelle magnetisch von einem Polkern 20 im wesentlichen entkoppelt ist. Es sind im Stand der Technik aber auch Lösungen (nicht dargestellt) bekannt, bei denen eine korrespondierende Trennstelle durch eine Schweißnaht od. dgl. gebildet ist. Längs des Polrohres 16 ist ein Magnetanker 22 in einem Ankerraum 24 längsverfahrbar geführt, der an seinem einen freien, stirnseitigen Ende mit einem stangenartigen Betätigungsteil 26 zusammenwirkt zum Betätigen von Fluidventilen (nicht dargestellt) üblicher Bauart, insbesondere in Form von nicht näher dargestellten Pneumatik-Ventilen. Zum Anschließen eines dahingehenden Ventils ist der Polkern 20 an seinem freien Ende mit einem Anschlußflansch 28 versehen. Der Anschlußflansch 28 weist an seinem Außenumfang vertiefte Ringnuten auf zur zumindest teilweisen Aufnahme von entsprechenden Elastomer-Dichtringen und zum Führen von Medienströmen.

Zum Bestromen der Spulenwicklung 14 des Spulenkörpers 12, die bevorzugt aus mindestens einem leitfähigen Kupferdraht besteht, ist ein Stekerteil 30 vorgesehen, das vorzugsweise über eine Vergußmasse 32 mit den sonstigen Gehäuseteilen des Gehäuses 10 fest verbunden ist. In Blickrichtung auf die Fig.1 gesehen ist auf der linken Seite und nach außen hin mit der Vergußmasse 32 abschließend eine ringförmigen Polplatte 34 eingesetzt, die für ihren festen Halt im Gehäuse 10 mit diesem entsprechend verstemmt ist (nicht dargestellt). Im übrigen umfaßt die Polplatte 34 den Außenumfang des Polkerns 20, der insoweit über die nicht näher dargestellte Ventileinrichtung in seiner in der Fig.1 gezeigten Einbaulage in der Betätigungsvorrichtung gehalten ist. Das Polrohr 16 ist topfartig in der Art einer Aufnahmehülse ausgebildet und das Bodenteil 36 des Polrohres 16 bildet insoweit eine Anschlagbegrenzung für den Magnetanker 22 in seiner in Blickrichtung auf die Fig.1 gesehen äußerst rechten Verfahrstellung aus. Die Vergußmasse 32 nebst Spulenkörper 12 bestehen aus einem Kunststoffmaterial, beispielsweise Polyamid, vorzugsweise aus PA6. Die Vergußmasse 32 auf der Oberseite der Betätigungsvorrichtung greift entlang ihrer Unterseite in Ausnehmungen eines topfartigen Gehäusemantels 38 ein, der gleichfalls Bestandteil des Gehäuses 10 ist. Sowohl Gehäusemantel 38 als auch Magnetanker 22 sowie Polkern 20 und Polplatte 34 bestehen aus einem metallischen Material, wobei alle genannten Teile aus demselben Material bestehen können. Das Polrohr 16 ist bevorzugt aus einem Edelstahlmaterial erstellt, das in Abhängigkeit des Einsatzzweckes magnetisch leitend oder nichtleitend ausgebildet sein kann.

Wird über das Steckerteil 30 die Spulenwicklung 14 und mithin die Spule bestromt, wird der Magnetanker 22 in seine in der Fig.1 gezeigte betätigte Stellung verfahren, also in Blickrichtung auf die Fig.1 gesehen von einer rechten Stellung in eine linke, die insoweit der Betätigungsstellung nach der Fig.1 entspricht. Bei der dahingehenden Verfahrbewegung nimmt der Magnetanker 22 das stangenförmige Betätigungsteil 26 mit, dessen freies Ende für einen Betätigungsvorgang an dem nicht näher dargestellten PneumatikVentil in jeder seiner Verfahrstellungen aus dem Gehäuse 10 und insbesondere aus dem Polkern 20 herausragt. Bei der dahingehenden Verfahrbewegung des Magnetankers 22 in Blickrichtung auf die Fig.1 gesehen nach links wird ein Energiespeicher in Form einer Druckfeder 40 vorgespannt und sobald die Spulenwicklung 14 stromlos gehalten ist, schiebt die vorgespannte Druckfeder 40 den Magnetanker 22 in seine rechte Ausgangsstellung zurück, bei der er auch in Anlage mit der Innenseite des Bodenteils 36 des Polrohres 16 kommen kann. Im dahingehend stromlosen Zustand ist die angeschlossene Ventileinrichtung stromlos offengeschaltet. Bei einer geänderten Ausführungsform (nicht dargestellt) der erfindungsgemäßen Betätigungsvorrichtung könnte es auch vorgesehen sein, den Energiespeicher in Form der Druckfeder 40 in die angeschlossene Ventileinrichtung zu verlegen, um dergestalt die angesprochene Rückstellbewegung für den Magnetanker 22 nebst Betätigungsteil 26 zu veranlassen.

Selbst bei Wegfall des Stromes kann es aber aufgrund von Restmagnetismusvorgängen im Polkern 20 und in der Polplatte 34 dazu kommen, dass der Magnetanker 22 mit seiner einen freien Stirnseite an der ihm zugewandten benachbarten Stirnseite des Polkerns 20 haften bleibt. Um dies zu vermeiden, wird zwischen die beiden Stirnseiten innerhalb des Ankerraumes 22 eine Antihafteinrichtung 42 eingesetzt, die mit einem radialen Abstand das stangenartige Betätigungsteil 26 umfaßt, um so wirksam eine Entkopplung vorzunehmen. Das stangenartige Betätigungsteil 26 ist von einem Mittenkanal 44 durchgriffen, der sich entlang der Längsachse 46 von Magnetanker 22 und Betätigungsteil 26 erstreckt, die insoweit auch die mögliche Verfahrachse bildet. Der genannte Mittenkanal 44 tritt an den beiden gegenüberliegenden Stirnseiten 48,50 des Betätigungsteils 26 in die Umgebung aus. Insbesondere mündet der Mittenkanal 44 auf der rechten Stirnseite 50 des Betätigungsteils 26 in einen Freiraum 52 des Magnetankers 22 aus, wobei der Freiraum 52 insoweit druck- und medienführend wiederum in den Ankerraum 24 ausmündet. Im Bereich zwischen einer Dichtungsstelle 54, die insoweit auch eine Führung ausbildet für das vordere Ende der Betätigungsstange 26, und dem Magnetanker 22 ist ein Querkanal 56 vorhanden, der mit seinem einen Ende in den Mittenkanal 44 ausmündet und mit seinem anderen Ende in einen Mittenraum 58 austritt, der von dem Polkern 20 umfaßt ist.

Die Komponenten Mittenkanal 44, Querkanal 56, Mittenraum 58, Freiraum 52 sowie Ankerraum 24 bilden eine Art Druckausgleichssystem aus, das an die nicht näher dargestellte Ventileinheit angeschlossen ist und insofern von der Ventileinheit kommende Druckmedien dergestalt kompensiert, dass die Verfahrbewegung des Magnetankers 22 nebst Betätigungsteil 26 durch etwaige Druckdifferenzen nicht beeinträchtigt ist. Gegebenenfalls können die derart geführten Druckmedien auch aufgrund unterschiedlicher Flächenverhältnisse die aufzubringende Betätigungskraft seitens des Magnetankers 22 wirksam mit unterstützen. Im Bereich der Trennstelle 18 übergreift der Polkern 20 mit einem nasenartigen Ringvorsprung 60 die in diesem Bereich abgesetzte Stufung 62 des Magnetankers 22 derart, dass in jeder Verfahrstellung des Magnetankers 22 dieser innerhalb des Ringvorsprunges 60 geführt ist, so dass sich die Größe der Trennstelle 18 je nach Verfahrrichtung des Magnetankers 22 ändert.

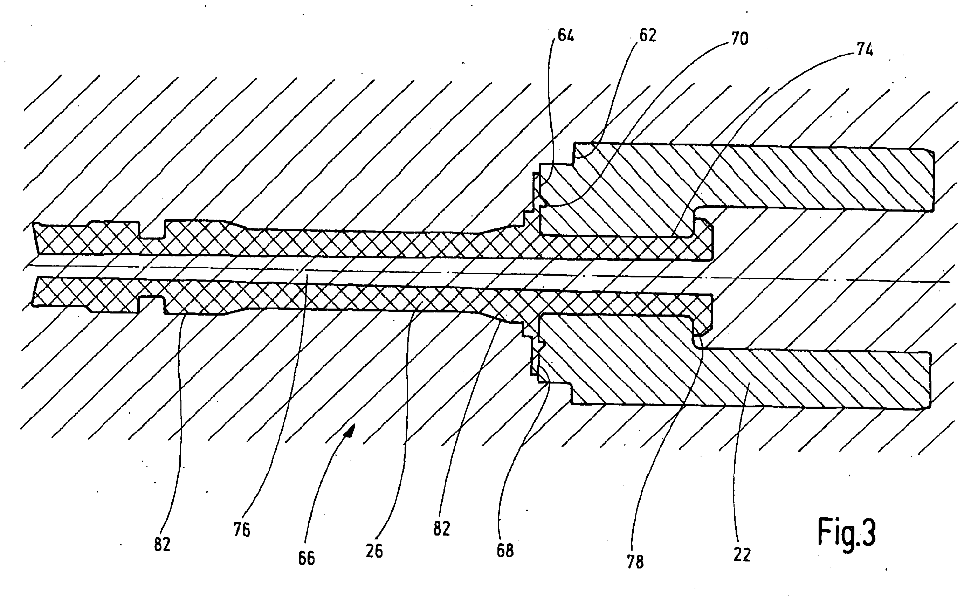

Das stangenartige Betätigungsteil 26 ist aus einem spritzbaren Material gebildet, das insbesondere gemäß Darstellung nach der Fig.3 in einem Verbindungsbereich 64 an den Magnetanker 22 angespritzt ist. Sofern hier von Anspritzen die Rede ist, schließt dies die üblichen Spritz-, Gieß- und Druckgießverfahren mit ein. Das spritzbare Material des Betätigungsteils 26 kann dem Grunde nach jedes derart verarbeitbare Material sein. Vorzugsweise wird jedoch ein Kunststoffmaterial eingesetzt, insbesondere ein thermoplastisch verarbeitbarer Kunststoff. Als besonders vorteilhaft hat sich der Einsatz von Polybutylenterephthalat (PBT) erwiesen, das ein Spritzgießen bei Massetemperaturen von 230°C bis 270°C erlaubt. Das eingesetzte Kunststoffmaterial weist die notwendige Festigkeit und Steifigkeit auf und das Gleit- und Verschleißverhalten hat sich in praktischen Versuchen für die hier vorliegende Anwendung als sehr gut erwiesen. Im vorliegenden Ausführungsbeispiel ist das gesamte Betätigungsteil 26 aus einem spritzbaren Kunststoffmaterial gebildet; es besteht hier aber auch die Möglichkeit, das Betätigungsteil 26 im vorderen Bereich aus einem üblichen metallischen Stangenwerkstoff zu bilden, der dann nur im Übergangsbereich zum Magnetanker 22 mittels spritzbarem Material angespritzt ist.

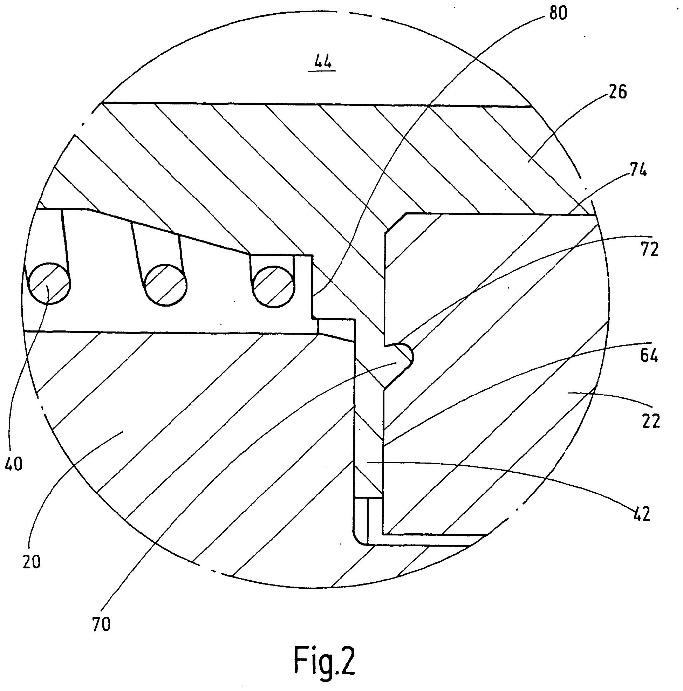

In der Fig.3 ist eine als Ganzes mit 66 bezeichnete Spritzgußform teilweise und von ihrem prinzipiellen Aufbau her dargestellt. Für einen Entformvorgang ist die dahingehende Spritzgußform 66 mehrteilig ausgebildet (nicht dargestellt) und läßt sich insoweit mit ihren Teilen zur Gesamtform gemäß der Darstellung nach der Fig.3 zusammensetzen. In die Spritzgußform 66 wird der metallische Magnetanker 22 eingelegt, der an seiner einen freien Stirnseite den Verbindungsbereich 64 ausbildet. Die derart gebildete mögliche Anspritzfläche 68 ist nach außen hin durch die Wandung der Spritzgußform 66 begrenzt und derart gewählt, dass diese jedenfalls nicht über die freie Stirnseite des Magnetankers 22 in diesem Bereich vorsteht. Ferner ist innerhalb der Anspritzfläche 68 in die freie Stirnseite des Magnetankers 22 eine umlaufende ringnutartige Vertiefung 70 eingebracht, die in vergrößerter Darstellung in der Fig.2 wiedergegeben ist und eine Art Hinterschnittgestaltung 72 ausbildet, damit das eingespritzte Kunststoffmaterial sich entsprechend unterhakend im Hinterschnitt im Magnetanker 22 entlang des Verbindungsbereichs 64 halten kann. Weiter weist der Magnetanker 22 eine zentral verlaufende Mittenöffnung 74 auf, die von dem Betätigungsteil 26 durchgriffen ist, wobei gemäß der Darstellung nach der Fig.3 ein entsprechend eingelegter Formkern 76 die dahingehende Ausgestaltung ermöglicht. Da die Mittenöffnung 74 in den sich erweiternden Freiraum 52 austritt, ist dort eine weitere Anlagefläche als zweite Anspritzfläche 78 des Magnetankers 22 ausgebildet. Im Bereich der zweiten Anspritzfläche 78 übergreift das Kunststoffmaterial des Befestigungsteils 26 die insoweit gebildete Verbreiterungsstufe, so dass in beiden Verfahrrichtungen des Magnetankers 22 eine sichere Verankerung des Betätigungsteils 26 über den Anspritzvorgang gewährleistet ist.

Die Spritzgußform 66 nach der Fig.3 ist derart ausgebildet, dass das stangenartige Betätigungsteil 26 sich radial nach außen hin verbreitert unter Ausbildung der bereits beschriebenen scheibenartigen Antihafteinrichtung 42. Insoweit ist der Polkern 20 vom Magnetanker 22 sicher entkoppelt und die Antihafteinrichtung 42 bildet auch eine Art Anschlagschutz für den Magnetanker 22 aus. Wie insbesondere die Fig.2 zeigt, ist zwischen der scheibenförmigen Antihafteinrichtung 42 und der sonstigen Umfassungsfront des Betätigungsteils 26 eine Anlagestufe 80 eingebracht, an der sich das eine freie Ende des Kraftspeichers in Form der Druckfeder 40 abstützt. Insoweit ist die eigentliche Antihafteinrichtung 42 von der Krafteinleitung der Druckfeder 40 entlastet, die im übrigen in jeder Verfahrstellung des Magnetankers 22 das stangenartige Betätigungsteil 26 in Richtung des Verbindungsbereiches 64 des Magnetankers 22 drückt. Wie sich des weiteren aus den Fig.1 und 3 ergibt, verjüngt sich der Mittenraum 58 zu beiden Seiten hin, indem das stangenartige Betätigungsteil 26 entlang von zwei Übergangsbereichen 82 sich im Durchmesser konisch verbreitert.

Die Ausführungsform nach der Fig.4 ist jedenfalls insoweit abgeändert, als im Verbindungsbereich 64 das angespritzte Kunststoffmaterial zur Erhöhung der Anbindungsmasse nierenartige Verbreiterungen 84 aufweist, wobei wiederum die Antihafteinrichtung 42 einstückiger Bestandteil des Betätigungsteils 26 ist. Durch die diametral einander gegenüberliegenden ringartigen Vertiefungsstellen 86, die sich kreissegmentartig an die Nieren 84 beidseits anschließen, braucht der Energiespeicher in Form der Druckfeder 40 nicht insgesamt auf dem angespritzten Kunststoffmaterial aufzuliegen, sondern kann sich für eine verbesserte Abstützung an den Metallbereichen des Magnetankers 22 direkt abstützen.

Die Ausführungsform nach den Figuren 5 entspricht vom grundsätzlichen Aufbau her der Ausführungsform nach den Figuren 4; allein ist hier die Antihafteinrichtung 42 als Antiklebscheibe über eine entsprechende Eingreifstelle 88 mit dem Magnetanker 22 stirnseitig fest verbunden. Im dahingehenden Fall liegt die Druckfeder 40 mit ihrem einen Ende direkt an der Stirnseite des Magnetankers 22 an, und zwar im Bereich des Ringspaltes 90, gebildet durch den Zwischenabstand von Außenumfang des Befestigungsteils 26 zum Innenumfang der eigenständig ausgebildeten Antiklebscheibe der Antihafteinrichtung 42.

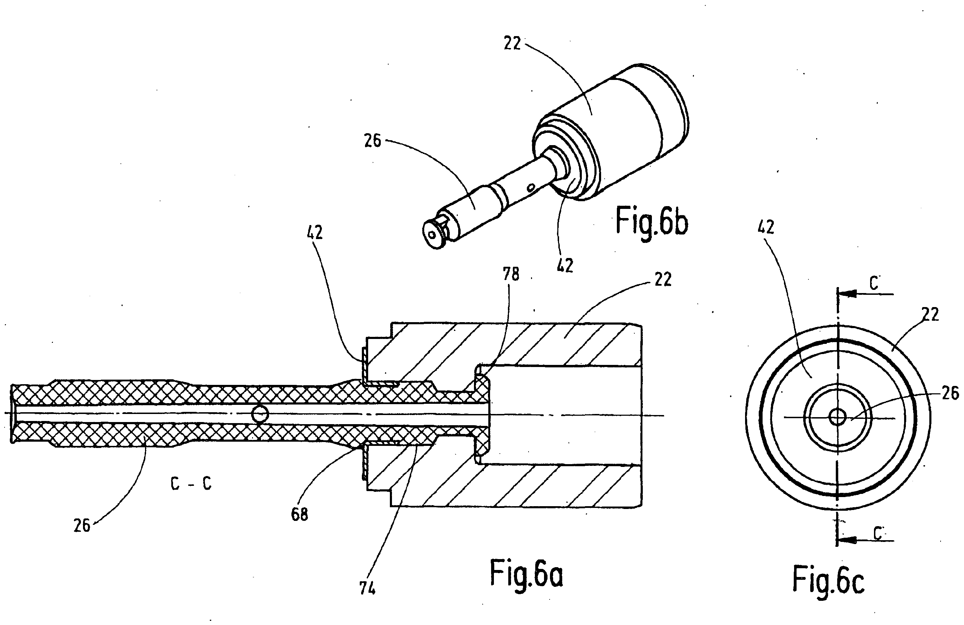

Bei der Ausführungsform nach den Fig.6 wiederum ist die Antihafteinrichtung 42 aus einem Antiklebtopf gebildet, der mit seinem radialen Umfassungsrand an der Stirnseite des Magnetankers 22 anliegt und ansonsten mit seinem zylindrisch eingewölbten Bodenteil in die Mittenöffnung 74 des Magnetankers 22 eingreift. Insoweit liegt das Betätigungsteil 26 mit seinem anspritzbaren Kunststoffmaterial nur im Bereich der zweiten Anspritzfläche 78 direkt am Magnetanker 22 an und die erste Anspritzfläche 68 ist gebildet durch die Anlage an die Oberseite der genannten Antihafteinrichtung 42.

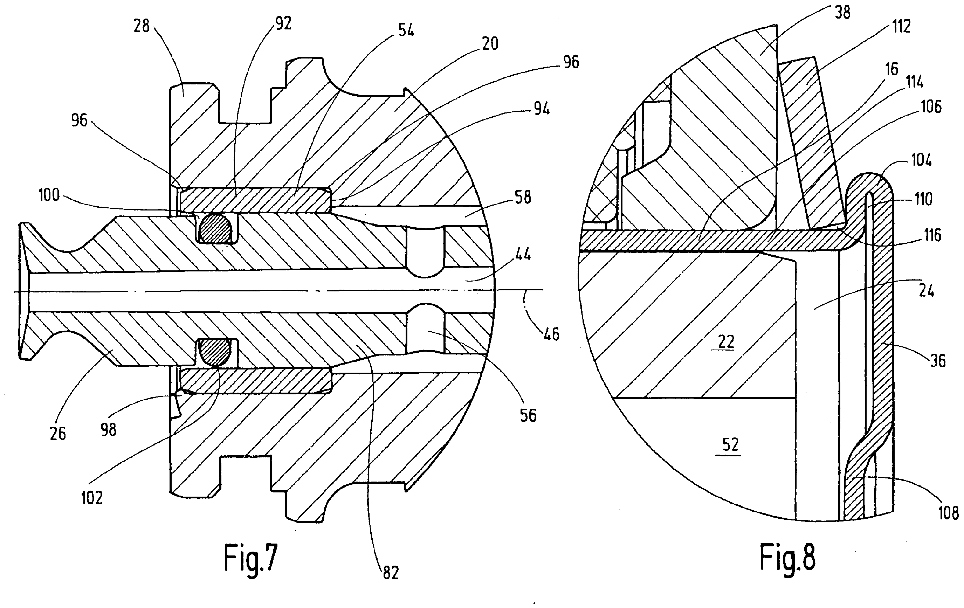

Die Darstellung nach der Fig.7 zeigt die Betätigungsvorrichtung mit der Dichtungsstelle 54, die den Mittenraum 58 gegenüber dem freien Umgebungsraum nach außen hin abdichtet, in den das freie Ende des Betätigungsteils 26 hineinragt. Die genannte Dichtungsstelle 54 ist aus einem Ringkörper 92 gebildet, der in eine absatzartige Verbreiterung 94 am freien Ende des Polkerns 20 eingesetzt, insbesondere dort eingepreßt ist. Für den dahingehenden Einpreßvorgang weist der Ringkörper 92 zu seinen beiden freien Enden hin konische Einführhilfen 96 auf. Der Ringkörper 92 ist aus einem Werkstoff mit guten Dicht- und Gleiteigenschaften gebildet, wobei neben spritzbaren Kunststoffen, wie Polyamid, auch durchaus Buntmetallmaterialien zum Einsatz kommen könnten. Sofern besonders gute Gleiteigenschaften verlangt werden, kann auch ein PTFE-Werkstoff den Ringkörper 92 ausbilden. Damit der Ringkörper 92 sicher in der Aufnahme im Polkern 20 verbleibt, kann darüber hinaus der Polkern 20 längs seines freien Innenbereiches zumindest teilweise eingebördelt werden, so dass Bördelrandabschnitte 98 nach außen hin eine wirksame Anschlagbegrenzung ausbilden. Anstelle einer abschnittsweisen Ausgestaltung kann der Bördelrand auch umlaufend ausgebildet sein.

Wie weiter die Darstellung nach der Fig.7 verdeutlicht, ist in eine Ringnut 100 ein Elastomerdichtring 102 eingebracht, der insoweit eine Abdichtung zwischen Mittenraum 58 und der freien Umgebung mit sicherstellt. Darüber hinaus ist zwischen Ringnut 100 und benachbartem Übergangsbereich 82 des Betätigungsteils 26 der Durchmesser des Betätigungsteils verbreitert und insoweit in direkter Gleitanlage mit der Innenseite des vorzugsweise als Preßhülse ausgebildeten Ringkörpers 92, was zum einen eine zusätzliche Abdichtung neben dem Elastomerdichtring 102 ergibt und im übrigen eine exakte endseitige Führung für das Betätigungsteil 26 sicherstellt entlang der Längs- oder Verfahrachse 46. Auf der abgewandten Seite zu dem Übergangsbereich 82 ist hingegen der Außendurchmesser des Betätigungsteils 26 verringert, um so einen hemmfreien Betrieb sicherzustellen und den Einfahrvorgang des Betätigungsteils 26 an der Stelle des Übergangs zum Ringkörper 92 nicht zu beeinträchtigen.

Wie insbesondere die Fig.8 in Verbindung mit der Fig.1 zeigt, ist das Polrohr 16, das in Blickrichtung auf die Figuren gesehen am rechten Rand aus dem Gehäusemantel 38 des Gehäuses 10 austritt, mit einem verbreiterten und umgelenkten Rand 104 versehen, der insoweit sich mit einem vorgebbaren axialen Abstand zu der Außenwand des Gehäusemantels 38 erstreckt. Die dahingehende Ausgestaltung bildet eine Art Loslagerstelle aus. Der insoweit gebildete Rand 104 bildet die Übergangsstelle aus zwischen der zylindrischen Polrohrwandung 106 und dem quer dazu verlaufenden Bodenteil 36. Zu seiner Mitte hin ist das Bodenteil 36 in Richtung des Ankerraums 24 mit einer Abkröpfung 108 versehen, die in einer rechten Anschlagstellung des Magnetankers 22 in dessen Freiraum 52 hineinragt. Ansonsten bildet das federelastisch nachgiebige Bodenteil 36 eine Anschlagdämpfung für den auftreffenden Magnetanker 22 aus, sofern dieser seine ganz rechte Verfahrstellung gemäß der Darstellung nach der Fig.1 einnimmt.

Der insoweit umgelegte Rand 104 begünstigt diesen Effekt durch Ausbilden einer federelastisch nachgiebigen Gelenkstelle. In den derart gebildeten Rand 104 mündet ein Umlaufspalt 110 ein, in den Medium gelangen kann, was wiederum der Aussteifung des Gesamtsystems in diesem Bereich zugute kommt. Von besonderem Vorteil ist aber, dass für das Polrohr 16 in jedem Temperaturzustand ein Toleranzausgleich geschaffen ist durch ein federelastisch nachgiebiges Rückstellmittel 112 in Form eines Energiespeichers, beispielsweise gebildet aus Bestandteilen einer Tellerfeder 114, von der in der Fig.8 ein Segmentteil dargestellt ist. Anstelle einer einzelnen Segment-Tellerfeder 114 gemäß der Darstellung nach der Fig.8 könnte dem Grunde nach aber auch ein Tellerfederpaket treten oder ein sonstiges Rückstellmittel, beispielsweise in Form einer üblichen Spiralfeder, die als Druckfeder wirkt. Auch könnte man an dieser Stelle einen Federbalg einsetzen oder einen vorgespannten Elastomerring, sofern dessen Einsatz aufgrund der herrschenden Temperaturen überhaupt möglich wäre.

Das Rückstellmittel 112, vorzugsweise in Form der Tellerfeder 114, greift mit seinem einen Ende wirksam an der freien Stirnseite des Gehäusemantels 38 an und stützt sich mit dem anderen freien Ende an einem Umlenkbereich 116 ab, an dem die zylindrische Polrohrwandung 106 in den vorkragenden Rand 104 übergeht. Im Hinblick auf ein hohes Maß an Korrosionsbeständigkeit ist das Polrohr 16 aus einem Edelstahlmaterial gebildet und das eingesetzte Rückstellmittel 112 hat auch noch den Vorteil, dass bei auftretenden Vibrationen an der Betätigungsvorrichtung das Polrohr 16 gegenüber dem Gehäuse 10 entkoppelt ist. Der nach rechts hin gewählte Überstand für den Rand 104 gegenüber der freien Stirnfläche des Gehäusemantels 38 ist derart gewählt, dass das jeweilige Rückstellmittel 112 mit seiner Vorspannung sicher am Polrohr 16 angreifen kann und dass dieses dennoch Bauraum sparend an dem sonstigen Gehäuse 10 anordenbar ist. Die genannte Abkröpfung 108 stellt darüber hinaus sicher, dass das Polrohr 16 in seinem dahingehenden Bodenteilbereich 36 verstärkt ist, so dass es bei einem etwaigen Anschlagen des Magnetankers 22 nicht zu bleibenden Verformungen kommen kann.

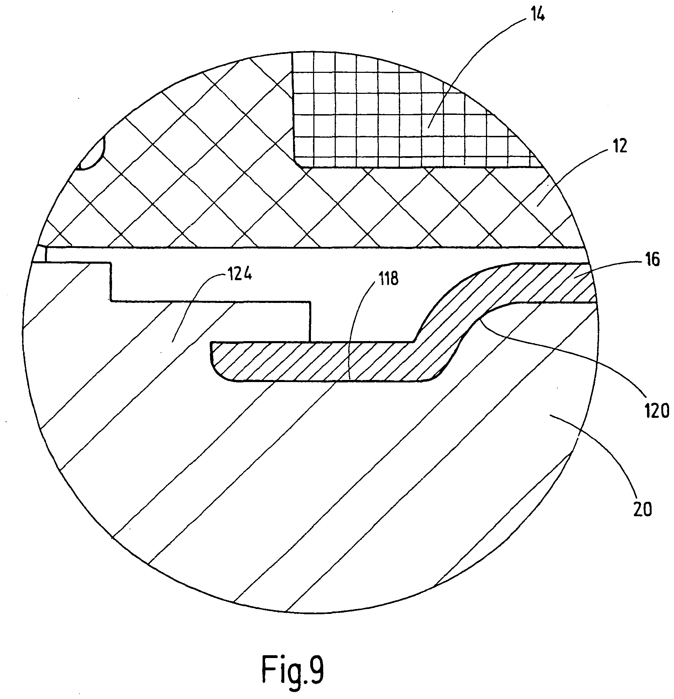

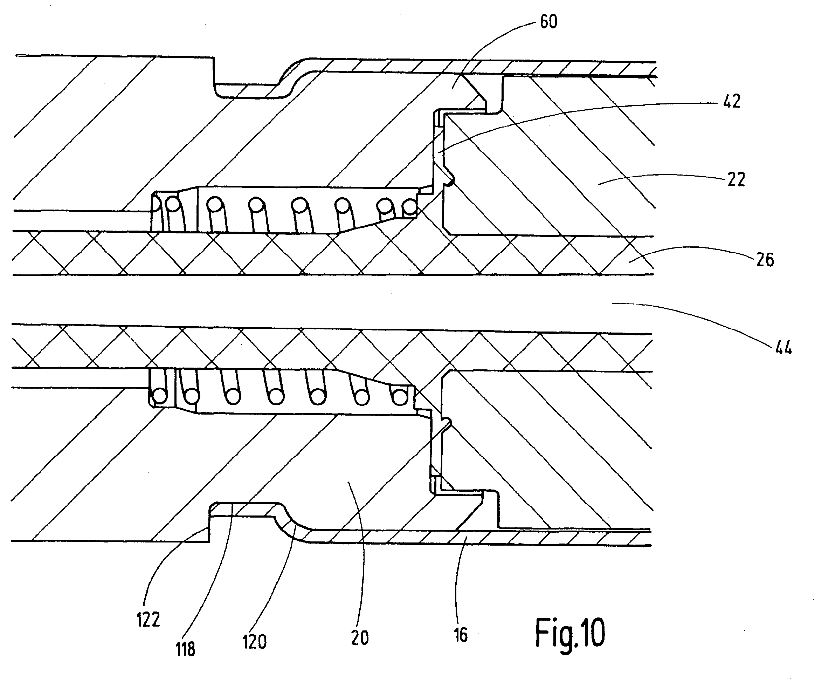

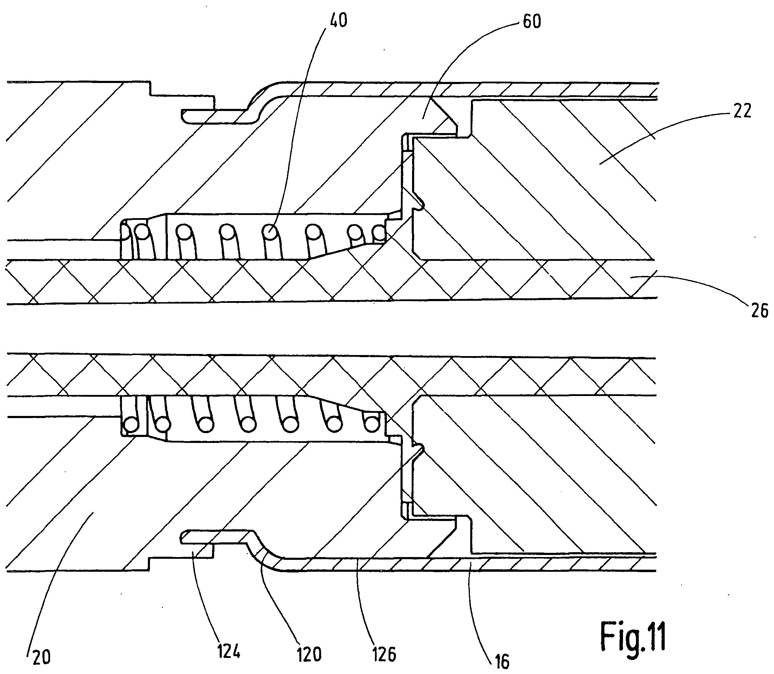

Die Lösung nach den Fig.9 bis 11 zeigt nun noch die linke Anbindungsstelle des Polrohres 16 am stationär angeordneten Polkern 20 in der Art einer Festlagerstelle. Hierfür weist der Polkern 20 in Richtung seines Ringvorsprunges 60 eine ringnutartige Verengungsstelle 118 auf, die in einem bogenförmigen Übergangsbereich 120 in den sonstigen Außendurchmesser des Polrohres 20 in Richtung des Ringvorsprunges 60 übergeht (vgl. Fig.1). Fig. 10 zeigt dabei, dass der dem bogenförmigen Übergangsbereich 120 abgewandte stufenförmige Übergangsbereich 122 zunächst unverformt ist und insoweit nur einen Anstoßbereich für das freie Ende des insoweit eingestemmten oder eingebördelten freien Endrandes des Polrohres 16 bildet. Ist dieser Herstellschritt insoweit vollzogen, wird gemäß der Darstellung nach der Fig.1 in einem zweiten Herstellschritt der stufenförmige Übergangsbereich 122 nach innen verstemmt, und zwar entlang einer Stemmfläche 124, die gegenüber dem sonstigen Außendurchmesser des Polkerns 20 in Richtung zur Polplatte 34 abgesetzt ist. Derart ist das freie Ende des Polrohres 16 von beiden Seiten her durch das in diesem Bereich verstemmte Polkernmaterial nicht nur axial und radial festgelegt, sondern auch gasdicht gehalten, d.h. die hier aufgezeigte Lösung kommt ohne zusätzliche Elastomerdichtung oder einem sonstigen Dichtsystem zwischen Polkern 20 im Bereich seines Ringvorsprunges 60 und der Festlegestelle am freien Endrand des Polrohres 16 aus.

Da die dahingehenden Betätigungsvorrichtungen auch teilweise im Hochtemperaturbereich eingesetzt werden, was grundsätzlich das Elastomermaterial von Dichtungen schädigt, ist insoweit eine kostengünstige Abdichtungsalternative realisiert. Durch den bogenförmigen Übergangsbereich 120 ist darüber hinaus das Polrohr ohne größere Knickstellen in Richtung des Ringvorsprunges 60 am Außenumfang des Polrohres 22 sicher geführt, so dass auch insoweit keine unnötige Materialbeanspruchung für das dünnwandige Polrohrmaterial auftritt. Im Hinblick auf diese Führungsstrekke 126 und die Führungszentrierung über das Rückstellmittel 112 am freien Endbereich des Polrohres 16 ist sichergestellt, dass es nicht zu Beulvorgängen kommt, die gegebenenfalls die freie Bewegbarkeit des Magnetankers 22 mit seinem Betätigungsteil 26 einschränken könnten.

Die erfindungsgemäße Betätigungsvorrichtung ist insbesondere im Niederdruckbereich für den Einsatzbereich bei Pneumatik-Ventilen auch im Hochtemperaturbereich bestimmt; bei entsprechender Modifizierung sind aber auch andere Anwendungen, insbesondere bei Hydraulikventilen, denkbar. Die sehr leichtgewichtige Betätigungsvorrichtung weist sehr kurze Schalt- und Reaktionszeiten auf und es lassen sich ausgesprochen hohe Lastwechsel erreichen, die im mehrstelligen Millionenbereich liegen können.

## Patentansprüche

1. Betätigungsvorrichtung, insbesondere zum Betätigen von außenseitig anschließbaren Ventilen, mit einem Gehäuse (10) und einem darin angeordneten Spulenkörper (12) mit Spulenwicklung (14), der zumindest teilweise ein Polrohr (16) umfaßt, an dessen einem freien Ende sich ein Polkern (20) anschließt, mit einem zumindest im Polrohr (16) innerhalb eines Ankerraumes (24) längsverfahrbar geführten Magnetanker (22), der mit einem Betätigungsteil (26) für das Betätigen des jeweiligen Ventilteils zusammenwirkt, **dadurch gekennzeichnet, dass** das Betätigungsteil (26) innerhalb des Polkerns (20) entlang eines Ringkörpers (92) geführt ist, der das Innere von Polkern (20) und an diesem angeschlossenen Polrohr (16) gegenüber der Umgebung abdichtet und dass in jeder Verfahrstellung des Betätigungsteils (26) ein an seinem Außenumfang in einer Ringnut (100) angebrachtes Dichtteil (102) in dichtender Anlage mit dem Innenumfang des Ringkörpers (92) ist.

2. Betätigungsvorrichtung nach Anspruch 1, **dadurch gekennzeichnet, dass** der Ringkörper (92) in der Art einer Preßhülse ausgebildet in eine Ausnehmung des Polkerns (20) eingesetzt ist, die mit ihrem einen Ende in die Umgebung mündet.

3. Betätigungsvorrichtung nach Anspruch 2, **dadurch gekennzeichnet, dass** der Ringkörper (92) zumindest teilweise mittels eines Bördelrandes (98) des Polkerns (20) in dessen Ausnehmung gehalten ist.

4. Betätigungsvorrichtung einem der Ansprüche 1 bis 3, **dadurch gekennzeichnet, dass** zumindest entlang der möglichen Verfahrstrecke des Dichtteils (102) und zum Inneren von Polkern (20) und Polrohr (16) gewandt der Außenumfang des Betätigungsteils (26) dichtend am zugeordneten Innenumfang des Ringkörpers (92) anliegt.

5. Betätigungsvorrichtung nach einem der Ansprüche 1 bis 4, **dadurch gekennzeichnet, dass** vom Dichtteil (102) in Richtung des freien Endes des Betätigungsteils (26) der Außendurchmesser des Betätigungsteils (26) gegenüber dem Außendurchmesser des Dichtteils (102) verringert ist.

6. Betätigungsvorrichtung nach einem der Ansprüche 1 bis 5, **dadurch gekennzeichnet, dass** der Ringkörper (92) zumindest auf seiner der Begrenzungswand der Ausnehmung zugewandten Seite eine vorzugsweise konische Einführhilfe (96) aufweist.

7. Betätigungsvorrichtung nach einem der Ansprüche 1 bis 6, **dadurch gekennzeichnet, dass** der Polkern (20) mit seiner freien Stirnseite einen Überstand (28) gegenüber der zur Umgebung weisenden Endseite des Ringkörpers (92) hat.

8. Betätigungsvorrichtung nach einem der Ansprüche 4 bis 7, **dadurch gekennzeichnet, dass** das stangenartige Betätigungsteil (26) ausgehend von seinem dichtenden Anlagebereich mit dem Ringkörper (92) sich in Richtung des Inneren von Polkern (20) und Polrohr (16) sich konisch verjüngt.

9. Betätigungsvorrichtung nach einem der Ansprüche 1 bis 8, **dadurch gekennzeichnet, dass** der Ringkörper (92) aus einem gleitfähigen Material, insbesondere aus einem thermoplastischen Kunststoffmaterial, gebildet ist.

## Claims

1. An actuating device, in particular for actuating valves that can be connected externally, comprising a housing (10) and a coil body (12) arranged therein and that has a coil winding (14), said coil body enclosing at least in part a pole tube (16) to one free end of which a pole core (20) is connected, with an armature (22) which is guided to be longitudinally displaceable at least in the pole tube (16) within an armature space (24), and which interacts with an actuating part (26) for actuating the respective valve part, **characterised in that** the actuating part (26) is guided within the pole core (20) along an annular body (92) which seals off the interior of the pole core (20) and the pole tube (16) connected to it from the surrounding area, and that in every travel position of the actuating part (26) a sealing part (102) attached to its outer periphery in an annular groove (100) is in sealing contact with the inner periphery of the annular body (92).

2. The actuating device according to Claim 1, **characterised in that** the annular body (92), which is designed as a compression sleeve, is inserted into a recess of the pole core (20) which with one end opens out into the surrounding area.

3. The actuating device according to Claim 2, **characterised in that** the annular body (92) is held at least partially by means of a flanged edge (98) of the pole core (20) in its recess.

4. The actuating device according to any of Claims 1 to 3, **characterised in that** at least along the possible travel path of the sealing part (102) and facing the interior of the pole core (20) and pole tube (16), the outer periphery of the actuating part (26) adjoins the assigned inner periphery of the annular body (92), forming a seal.

5. The actuating device according to any of Claims 1 to 4, **characterised in that** from the sealing part (102) in the direction of the free end of the actuating part (26), the outside diameter of the actuating part (26) is reduced relative to the outside diameter of the sealing part (102).

6. The actuating device according to any of Claims 1 to 5, **characterised in that** the annular body (92) has a preferably conical insertion aid (96) at least on its side facing the boundary wall of the recess.

7. The actuating device according to any of Claims 1 to 6, **characterised in that** the pole core (20) with its free face has a projection (28) relative to the end side of the annular body (92) directed toward the surrounding area.

8. The actuating device according to any of Claims 4 to 7, **characterised in that** the rod-shaped actuating part (26) tapers conically proceeding from its sealing contact region with the annular body (92) in the direction of the interior of the pole core (20) and the pole tube (16).

9. The actuating device according to any of Claims 1 to 8, **characterised in that** the annular body (92) is formed from a slippery material, in particular a thermoplastic material.

## Revendications

1. Dispositif d'actionnement, notamment pour actionner des vannes pouvant se fermer du côté extérieur, comprenant une enveloppe (10) et un corps (12) de bobine, qui y est mis, qui a un enroulement (14) de bobine et qui entoure, au moins en partie, un tube (16) polaire à l'une des extrémités libres duquel se raccorde un noyau (20) polaire, comprenant une armature (22) d'aimant guidée avec possibilité de se déplacer longitudinalement au moins dans le tube (16) polaire au sein d'un espace (24) d'armature, cette dernière coopérant avec une partie (16) d'actionnement pour l'actionnement de la partie respective de la vanne, **caractérisé en ce que** la partie (26) d'actionnement est guidée à l'intérieur du noyau (20) polaire le long d'une pièce (92) annulaire, qui rend étanche, vis-à-vis de l'atmosphère ambiante, l'intérieur du noyau (20) polaire et le tube (16) polaire qui y est raccordé et **en ce que**, dans chaque position de déplacement de la partie (26) d'actionnement, une partie (102) d'étanchéité mise sur son pourtour extérieur dans une rainure (100) annulaire est en contact étanche avec le pourtour intérieur de la pièce (92) annulaire.

2. Dispositif d'actionnement suivant la revendication 1, **caractérisé en ce que** la pièce (92) annulaire constituée à la manière d'une douille de compression est insérée dans un évidement du noyau (20) polaire, qui débouche par l'une de ses extrémités à l'atmosphère ambiante.

3. Dispositif d'actionnement suivant la revendication 2, **caractérisé en ce que** la pièce (92) annulaire est retenue, au moins en partie, dans son évidement, au moyen d'un collet (98) rabattu du noyau (20) polaire.

4. Dispositif d'actionnement suivant l'une des revendications 1 à 3, **caractérisé en ce que**, au moins le long de l'étendue de déplacement possible de la partie (102) d'étanchéité et tourné vers l'intérieur du noyau (20) polaire et du tube (16) polaire, le pourtour extérieur de la partie (26) d'actionnement s'applique avec étanchéité au pourtour intérieur associé de la pièce (92) annulaire.

5. Dispositif d'actionnement suivant l'une des revendications 1 à 4, **caractérisé en ce que**, à partir de la partie (102) d'étanchéité en direction de l'extrémité libre de la partie (26) d'actionnement, le diamètre extérieur de la partie (26) d'actionnement est diminué par rapport au diamètre extérieur de la partie (102) d'étanchéité.

6. Dispositif d'actionnement suivant l'une des revendications 1 à 5, **caractérisé en ce que** la pièce (92) annulaire a, au moins du côté tourné vers la paroi de délimitation de l'évidement, une aide (96) à l'introduction, de préférence conique.

7. Dispositif d'actionnement suivant l'une des revendications 1 à 6, **caractérisé en ce que** le noyau (20) polaire a, par son côté frontal libre, un porte-à-faux (28) par rapport au côté d'extrémité tourné vers l'atmosphère ambiante de la pièce (92) annulaire.

8. Dispositif d'actionnement suivant l'une des revendications 4 à 7, **caractérisé en ce que** la partie (26) d'actionnement de type à tige se rétrécit coniquement à partir de sa région d'application avec étanchéité à la pièce (92) annulaire en direction de l'intérieur du noyau (20) polaire et du tube (16) polaire.

9. Dispositif d'actionnement suivant l'une des revendications 1 à 8, **caractérisé en ce que** la pièce (92) polaire est en un matériau apte à glisser, notamment en une matière plastique thermoplastique.
